# FASCICULE DE BREVET EUROPEEN

(11) **EP 0 438 939 B1**
(45) Date de publication et mention de la délivrance du brevet: **26.02.1997**
(21) Numéro de dépôt: 90403647.2
(22) Date de dépôt: 18.12.1990
(51) Int. Cl.: C08L 25/02, C08K 5/00, C08K 5/3492, C08K 5/05, C08K 5/521

(54) **Compositions thermoplastiques à tenue au feu comprenant des polymères alcénylaromatiques**
Flammhemmende thermoplastische Zusammensetzung enthaltend vinylaromatische Polymere
Thermoplastic compositions comprising vinylaromatic polymers exhibiting flame resistance

(30) Priorité: 21.12.1989 FR 8916973
(43) Date de publication de la demande: 31.07.1991
(73) Titulaire: ELF ATOCHEM S.A., 92800 Puteaux (FR)
(72) Inventeur: Wirth, René, F-62300 Lens (FR)
(74) Mandataire: Foiret, Claude Serge

(56) Documents cités:
- EP-A- 0 311 909
- FR-A- 2 564 475
- GB-A- 2 142 638

## Description

La présente invention concerne des polymères d'hydrocarbures alcénylaromatiques, des copolymères à base d'hydrocarbures alcénylaromatiques et des compositions comprenant lesdits polymères et copolymères associés à d'autres polymères thermoplastiques ou élastomériques, contenant des agents retardateurs de combustion ne comportant pas d'atome d'halogène.

Les polymères et copolymères d'hydrocarbures alcénylaromatiques, et les compositions les contenant, sont bien connus pour leurs propriétés remarquables et sont devenus des thermoplastiques de grande diffusion aux applications très diversifiées. Ils présentent cependant une tenue au feu médiocre et brûlent facilement.

Il est connu d'ajouter des agents ignifugeants à ces polymères, copolymères et compositions. Les plus couramment utilisés consistent en composés contenant au moins un atome d'halogène, généralement le brome. L'efficacité de ces composés a été largement démontrée. Ils présentent cependant un inconvénient résidant, lors d'une attaque par le feu, dans l'émission de gaz halogénés nocifs et corrosifs.

Il est également connu par le document JP-A-54/85242 d'ignifuger le polystyrène au moyen de 3 à 50 parties en poids de cyanurate de mélamine, pour 100 parties en poids de polystyrène.

On connait par le document FR-A-2096230 des compositions thermoplastiques moulables par injection, ininflammables, comprenant au moins 60% en poids de mélamine et au plus 40% en poids de polystyrène.

On connaît par le document JP-A-54/46250 des compositions comprenant de 30 à 80 parties en poids de polystyrène, de 20 à 70 parties en poids de mélamine et de 0,05 à 5 parties en poids (exprimées en phosphore) d'un composé phosphoré.

Le document EP 311909 décrit des compositions ignifuges contenant du polystyrène, un dérivé organique du phosphore C₁ et un dérivé azoté C₂ tel que la mélamine ou l'isocyanurate de mélamine tel que le rapport en poids C₁/C₂ soit compris entre 20:1 et 2:1.

Le document GB 2 142 638 décrit des compositions ingifuges contenant du polystyrène, un polyol et un dérivé organique du phosphore.

De façon à, d'une part, éviter l'utilisation de composés ignifugeants halogénés et, d'autre part, éviter l'emploi de fortes quantités de mélamine ou de cyanurate de mélamine qui ont un effet défavorable sur les propriétés mécaniques des matériaux obtenus, la demanderesse a cherché à associer à ces derniers composés d'autres produits de façon à obtenir des matériaux ayant une bonne tenue au feu et présentant une moindre dégradation de leurs propriétés mécaniques.

Un premier projet de la présente invention concerne des compositions thermoplastiques contenant au moins un polymère ou copolymère d'hydrocarbure alcénylaromatique et de l'isocyanurate de mélamine et/ou de la mélamine, caractérisées en ce qu'elles comprennent, pour 100 parties en poids d'un matériau thermoplastique comprenant au moins un polymère ou copolymère d'hydrocarbure alcénylaromatique et, le cas échéant, au moins une autre résine thermoplastique ou élastomérique :
- de 5 à 30 parties en poids d'au moins un composé azoté choisi parmi la mélamine et l'isocyanurate de mélamine,
- de 2 à 10 parties en poids d'au moins un polyol contenant au moins 4 fonctions hydroxyle par molécule, et
- de 0 à 14 parties en poids d'au moins un ester organique de l'acide phosphorique.

Par polymère d'hydrocarbure alcénylaromatique, on entend selon la présente invention le produit de l'homopolymérisation d'un hydrocarbure aromatique éthylèniquement insaturé tel que le styrène, l'alpha-méthylstyrène, les vinyltoluènes, les vinylxylènes, les méthyléthylstyrènes.

Par copolymère d'hydrocarbure alcénylaromatique, on entend selon la présente invention le produit de la copolymérisation de plusieurs des hydrocarbures alcénylaromatiques cités à l'alinéa précédent, ou bien d'au moins un des ces hydrocarbures avec au moins un autre monomère copolymérisable tel que l'acide acrylique, l'acide méthacrylique, l'anhydride maléïque, les (méth)acrylates d'alkyle dont le radical alkyle comprend de 1 à 8 atomes de carbone, l'acrylonitrile, le butadiène-1,3.

Par autre résine thermoplastique que l'on peut, le cas échéant, associer au polymère ou copolymère d'hydrocarbure alcénylaromatique, on entend notamment selon la présente invention :
- le poly(phénylèneoxyde),
- le polyéthylène et les copolymères d'éthylène et d'au moins une alpha-oléfine ayant de 3 à 8 atomes de carbone, ces deux dernières résines pouvant être compatibilisées au moyen d'un copolymère éthylène/styrène greffé ou branché, conformément par exemple au brevet GB870650,
- les homopolymères et copolymères à base d'esters de l'acide acrylique ou méthacrylique, tels le poly(méthacrylate de méthyle),
- les copolymères d'éthylène et d'au moins un comonomère polaire insaturé tel que l'acétate de vinyle, les (méth)acrylates d'alkyle, l'acide acrylique, l'acide méthacrylique, l'anhydride maléïque,
- le polycarbonate.

Le matériau thermoplastique peut comprendre le polymère ou copolymère d'hydrocarbure alcénylaromatique et la résine thermoplastique en toutes proportions. Avantageusement il comprendra de 10 à 90% en poids de l'un et de 90 à 10% en poids de l'autre. De préférence, quand le matériau thermoplastique comprend un polymère ou copolymère à base d'éthylène, le polymère ou copolymère d'hydrocarbure alcénylaromatique est compris à plus de 50% enpoids dans ledit matériau.

Par autre résine élastomérique que l'on peut, le cas échéant, associer au polymère ou copolymère d'hydrocarbure alcénylaromatique, on entend notamment selon la présente invention l'un au moins des polymères suivants, portant ou non des greffons d'hydrocarbure alcénylaromatique polymérisé: un élastomère polyoléfinique tel qu'un terpolymère d'éthylène avec au moins une alpha-oléfine ayant de 3 à 6 atomes de carbone et au moins un diène, particulièrement les terpolymères éthylène-propylène-diène, le diène étant choisi parmi les diènes linéaires ou cycliques, conjugués ou non conjugués comme par exemple le butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)2-norbornène, le 1,5-cyclooctadiène, le bicyclo-2,2,2-octa-2,5-diène, le cyclopentadiène, le 4,7,8,9-tétrahydroindène et l'isopropylidène tétrahydroindène. De tels terpolymères élastomériques utilisables conformément à la présente invention comprennent en général entre 15% et 60% en moles de motifs dérivés du propylène et entre 0,1% et 20% en moles de motifs dérivés du diène. L'autre résine élastomérique peut également être un caoutchouc de styrène/butadiène, un caoutchouc de polydiène comme le polybutadiène et le polyisoprène, le caoutchouc nitrile, le caoutchouc d'éthylène/propylène.Généralement l'autre résine élastomérique est utilisée en quantité au plus égale à 20% en poids, et de préférence comprise entre 5% et 15% en poids, par rapport au poids du matériau thermoplastique.

La mélamine ou 2,4,6-triamino-1,3,5-triazine est un composé commercial. Elle est généralement préparée par condensation-cyclisation de l'urée avec libération de NH₃ et CO₂.

L'isocyanurate de mélamine est obtenu par réaction de la mélamine avec l'acide cyanurique, généralement mole à mole, en solution aqueuse, à une température de 90 à 100°C environ, suivie d'une élimination de l'eau. Cette réaction peut avoir lieu in-situ c'est-à-dire lors de la préparation des compositions selon l'invention par malaxage à une température généralement au moins égale à 150°C environ, d'acide cyanurique ou isocyanurique et de mélamine avec le polymère ou copolymère d'hydrocarbure alcénylaromatique. Par isocyanurate de mélamine on entend également selon la présente invention le cyanurate de mélamine et les mélanges de cyanurate et d'isocyanurate de mélamine. On admet pour l'isocyanurate de mélamine la formule suivante d'un sel complexe :

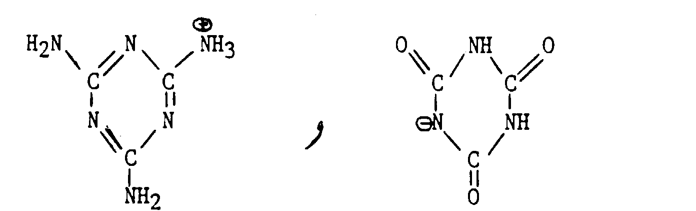

Par polyol contenant au moins 4 fonctions hydroxyle par molécule, on entend selon l'invention tout polyol à structure cyclique ou acyclique au moins tétrahydroxylé. La chaîne hydrocarbonée peut, le cas échéant, comporter au moins un hétéroatome d'oxygène. On citera par exemple les tétrols comme le pentaérythritol, l'érytritol, l'arabinose, le ribose, le xylose ; les pentols comme l'adonitol, l'arabitol, le xylitol, le fructose, le galactose, le glucose, le mannose, le sorbose ; les hexols comme le dulcitol, le mannitol, le sorbitol, le dipentaérythritol, l'inositol ; les octols comme le tripentaérythritol, le sucrose, le lactose, le maltose ; et leurs mélanges.

L'ester organique de l'acide phosphorique est ajouté facultativement aux compositions selon l'invention dans le but essentiel de les plastifier légèrement. Cet ester peut être choisi par exemple parmi le tributylphosphate, le tris(2-éthylhexyl)phosphate (ou trioctylphosphate), le tris(2-butoxyéthyl)phosphate, le triphénylphosphate, le tricrésylphosphate et leurs mélanges. On préfère les esters comportant au moins un cycle aromatique. Quand la mélamine est utilisée comme composé azoté on utilise avantageusement une quantité d'ester organique de l'acide phosphorique comprise entre 1 et 5 parties en poids pour 100 parties en poids de matériau thermoplastique.

Les compositions selon l'invention peuvent comprendre en outre une quantité efficace, généralement comprise entre 0,1 et 1% en poids, d'ingrédients facilitant leur mise en oeuvre lors, par exemple, des opérations d'extrusion ou de moulage et/ou améliorant leur stabilité. Il peut s'agir de lubrifiants comme l'acide stéarique et ses sels tel le stéarate de zinc, d'antioxydants comme le pentaérythrityl tétrakis((3-(3,5-ditertiobutyl-4-hydroxyphényl)propionate), l'octadécyl 3-(3,5-ditertiobutyl-4-hydroxyphényl) proprionate, le butylhydroxytoluène, le tris(2-méthyl-4-hydroxy-5-tertiobutylphényl)butane.

Les compositions selon l'invention peuvent en outre comprendre une quantité efficace, généralement comprise entre 0,1 et 0,5% en poids de plastifiants, d'agents antistatiques, de stabilisants à la lumière comme au moins un agent de protection contre le rayonnement ultraviolet choisi parmi les benzotriazoles et les amines à empêchement stérique. Comme benzotriazoles on peut par exemple citer le 2-(2-hydroxy-5-tertiooctylphényl)benzotriazole, le 2-(2'-hydroxy-5'-méthylphényl)benzotriazole. Comme amine à empêchement stérique on peut citer par exemple le disébaçate de 2,2',6,6'-tétraméthyl-4-pipéridyle.

Les compositions selon l'invention sont préparées par mélange des différents constituants. Si la nature physique des additifs utilisés le permet, c'est-à-dire s'ils sont tous à l'état solide à température ambiante, alors le mélange peut-être réalisé à sec à température ambiante dans un mélangeur à poudre dans lequel on introduit les différents constituants de la composition à l'état de poudre, au plus de perles pour les (co)polymères d'hydrocarbures alcénylaromatiques. Le mélange homogène obtenu, après environ 5 à 20 minutes de mélangeage, prêt à l'emploi, est une composition selon l'invention.

Il est également possible de préparer les compositions selon l'invention par malaxage des différents constituants à une température supérieure au point de ramollissement du polymère ou copolymère d'hydrocarbure alcénylaromatique, le cas échéant de la résine thermoplastique additionnelle définie ci-dessus si celle-ci est présente, par exemple voisine de 150° à 200°C, dans un mélangeur interne ou une extrudeuse pendant 1 à 5 min. Les compositions sont alors extrudées puis transformées en granulés homogènes prêts à l'emploi.

Les compositions selon l'invention trouvent des applications dans différents domaines par transformation en articles industriels destinés notamment aux industries de l'automobile, de l'électro-ménager et particulièrement du matérial audio-visuel comme les cache-arrières de récepteurs de télévision.

Les articles ainsi obtenus présentent, tout en voyant leurs propriétés mécaniques peu ou pas diminuées, une tenue au feu améliorée par rapport aux articles fabriqués à partir de compositions ne contenant ni mélamine, ni isocyanurate de mélamine, ni polyol. La vitesse de combustion des articles obtenus à partir des compositions selon l'invention, mesurée selon le test décrit ci-après est sensiblement diminuée. D'autre part la combustion, ralentie, des articles ne dégage pas de produits halogénés.

Les exemples suivants sont donnés à titre d'illustration.

Le test utilisé pour mesurer la tenue au feu des compositions est le test 65 CEI 1985 publié par la Commission Electrotechnique Internationale (Genève). Les barreaux soumis à ce test sont obtenus par moulage de compositions extrudées puis granulées, sous une presse WABASH à une température de 200°C environ, sous une pression de 50 bars environ, pendant une durée de 3 min. environ. Ils ont pour dimensions 127 x 12,7 x 2 mm.

Les résultats du test sont exprimés sous la forme de la vitesse de combustion du barreau horizontal en mm/min. Avantageusement les barreaux préparés à partir de compositions selon l'invention ont une vitesse de combustion selon ce test inférieure à 40 mm/min., de préférence inférieure à 35 mm/min., encore préférentiellement inférieure à 30 mm/min.

### EXEMPLE 1 (comparatif)

Des perles de polystyrène choc commercialisées par la société NORSOLOR sous la dénomination CEDEX ®4240 sont extrudées et transformées en granulés en présence de 0,5% en poids d'un mélange d'aide à l'extrusion constitué de 50% en poids de stéarate de zinc (lubrifiant), 30% en poids d'acide stéarique (lubrifiant) et 20% en poids d'Irganox ®1076 (antioxydant commercialisé par la société CIBA-GEIGY).

Les granulés sont transformés en barreaux comme indiqué ci-dessus, qui sont soumis au test de combustion. La vitesse de combustion mesurée est égale à 47 mm/min.

### EXEMPLES 2 à 6

Les compositions selon l'invention sont préparées en deux étapes. La première consiste à mélanger à température ambiante tous les constituants de la composition pour obtenir un mélange homogène qui, dans une deuxième étape est introduit dans un mélangeur interne ayant une capacité de 1,1 litre, dont la vitesse de rotation des rotors est de 115 tours par minute, et malaxé à une température de 175°C pendant 3 minutes.

Les compositions obtenues sont refroidies sous presse sous une pression de 10 bars pendant 3 minutes et conduisent à des préformes de 5 mm d'épaisseur qui sont ensuite découpées en bandes et granulées. Les barreaux nécessaires au test de combustion 65 CEI 1985 sont préparés comme indiqué ci-dessus à partir des granulés ainsi obtenus.

On a utilisé pour tous ces exemples :
- en tant que polymère du styrène (ci-après PS), les perles de polystyrène choc de l'exemple 1,
- de l'isocyanurate de mélamine (ci-après IM), commercialisé par la société NORSOLOR,
- en tant que polyol ayant au moins 4 fonctions hydroxyle par molécule, de l'inositol (ci-après OL) commercialisé par la société BLAUE sous la dénomination NF-11,
- en tant qu'ester organique de l'acide phosphorique, du phosphate de tris(2-éthylhexyle) (ci-après TOP) commercialisé par la société ALDRICH,
- en tant qu'aide à la mise en oeuvre, le même mélange qu'à l'exemple 1, dans les mêmes proportions (0,5 partie en poids pour 100 parties en poids de polystyrène).

Le tableau I ci-après récapitule, hormis le mélange d'aide à la mise en oeuvre, les quantités d'ingrédients de la composition en parties en poids pour 100 parties en poids de polystyrène et la vitesse de combustion (V) mesurée sur les barreaux obtenus à partir des compositions et exprimée en mm/min. selon le test 65 CEI 1985.

**TABLEAU I**

| Exemple | IM | OL | TOP | V |
|---|---|---|---|---|
| 1 | - | - | - | 47 |
| 2 | 23,8 | 7,9 | - | 22 |
| 3 | 25,2 | 5,6 | 8,4 | 29 |
| 4 | 25,2 | 8,4 | 5,6 | 32 |
| 5 | 15,1 | 5 | 5 | 39 |
| 6 | 24,5 | 2,7 | 8,2 | 37 |

### EXEMPLES 7 à 14

On a utilisé :
- le même polystyrène choc qu'à l'exemple 1, comprenant le même mélange d'aide à l'extrusion,
- en tant que composé azoté : la mélamine commercialisée par la société NORSOLOR (ci-après : M)
- le même polyol qu'aux exemples 2 à 6,
- en tant qu'ester organique de l'acide phosphorique : soit le tris(2-éthylhexyl)phosphate (TOP) utilisé pour les exemples 3 à 6, soit le triphénylphosphate (TPP) commercialisé par la société ALDRICH.

La préparation des compositions a été effectuée selon le même processus qu'aux exemples 2 à 6. Le tableau II récapitule les quantités de produits utilisées en parties en poids, hormis le mélange d'aide à la mise en oeuvre (0,5 partie en poids pour 100 parties en poids de polystyrène), pour 100 parties en poids de polystyrène, et la vitesse de combustion V mesurée de la même façon qu'aux exemples 1 à 6.

**TABLEAU II**

| Exemple | M | OL | TOP | TPP | V |
|---|---|---|---|---|---|
| 7 | 11,5 | 3,4 | - | - | 34 |
| 8 | 11,6 | 3,5 | - | 1,2 | 28 |
| 9 | 11,7 | 3,5 | 1,6 | - | 27 |
| 10 | 11,8 | 3,5 | - | 2,5 | 26 |
| 11 | 11,9 | 3,6 | 3,4 | - | 24 |
| 12 | 12,1 | 3,6 | - | 5,1 | 27 |
| 13 | 12,3 | 3,7 | 7 | - | 27 |
| 14 | 13 | 3,9 | - | 13 | 22 |

## Revendications

1. Compositions thermoplastiques contenant au moins un polymère ou copolymère d'hydrocarbure alcénylaromatique et de l'isocyanurate de mélamine ou de la mélamine, caractérisées en ce qu'elles comprennent, pour 100 parties en poids d'un matériau thermoplastique comprenant au moins un polymère ou copolymère d'hydrocarbure alcénylaromatique et, le cas échéant, au moins une autre résine thermoplastique ou élastomérique :
- de 5 à 30 parties en poids d'au moins un composé azoté choisi parmi la mélamine et l'isocyanurate de mélamine,
- de 2 à 10 parties en poids d'au moins un polyol contenant au moins 4 fonctions hydroxyle par molécule, et
- de 0 à 14 parties en poids d'au moins un ester organique de l'acide phosphorique.

2. Compositions selon la revendication 1 caractérisées en ce qu'elle contient un ester organique de l'acide phosphorique.

3. Compositions selon la revendication 2 caractérisées en ce que l'ester comporte au moins un cycle aromatique.

4. Compositions selon la revendication 3 caractérisées en ce que l'ester est le tris(2-éthylhexyl)phosphate ou le triphénylphosphate.

5. Compositions selon la revendication 4, caractérisées en ce que le tris(2-éthylhexyl)phosphate et le triphénylphosphate sont utilisés à raison de 1 à 5 parties en poids pour 100 parties en poids de matériau thermoplastique.

6. Compositions selon l'une des revendications 1 à 5 caractérisées en ce que le matériau thermoplastique comprend de 10 à 90% en poids du polymère ou copolymère d'hydrocarbure alcénylaromatique et de 90 à 10% en poids de résine thermoplastique.

7. Compositions selon l'une des revendications 1 à 6 caractérisées en ce que la résine élastomèrique est comprise à raison d'au plus 20% en poids dans le matériau thermoplastique.

8. Compositions selon l'une des revendications 1 à 7, caractérisées en ce que le polyol est choisi parmi les tétrols, pentols, hexols et octols.

9. Compositions selon la revendication 8, caractérisées en ce que le polyol est l'inositol.

10. Compositions selon l'une des revendications 1 à 9, caractérisées en ce qu'elles comprennent en outre des ingrédients facilitant leur mise en oeuvre et/ou améliorant leur stabilité, en une quantité comprise entre 0,1 et 1 % en poids.

11. Compositions selon l'une des revendications 1 à 10 caractérisées en ce qu'elles ne comprennent pas de phosphate inorganique.

12. Procédé de préparation des compositions conformes à l'une des revendications 1 à 11, par malaxage des différents constituants à une température supérieure au point de ramollissement du polymère ou copolymère d'hydrocarbure alcénylaromatique, comprise entre 150 et 200°C, pendant une durée comprise entre 1 et 5 minutes dans un mélangeur interne ou une extrudeuse.

13. Articles industriels obtenus par transformation de compositions conformes à l'une des revendications 1 à 11.

## Claims

1. Thermoplastic compositions containing at least one polymer or copolymer of an alkenylaromatic hydrocarbon and of melamine isocyanurate or of melamine, which are characterized in that they include, per 100 parts by weight of a thermoplastic material including at least one polymer or copolymer of an alkenylaromatic hydrocarbon and, if appropriate, at least one other thermoplastic or elastomeric resin:
- from 5 to 30 parts by weight of at least one nitrogen compound chosen from melamine and melamine isocyanurate,
- from 2 to 10 parts by weight of at least one polyol containing at least 4 hydroxyl functional groups per molecule, and
- from 0 to 14 parts by weight of at least one organic ester of phosphoric acid.

2. Compositions according to Claim 1, characterized in that they contain an organic ester of phosphoric acid.

3. Compositions according to Claim 2, characterized in that the ester comprises at least one aromatic ring.

4. Compositions according to Claim 3, characterized in that the ester is tri(2-ethylhexyl) phosphate or triphenyl phosphate.

5. Compositions according to Claim 4, characterized in that the tri(2-ethylhexyl) phosphate and the triphenyl phosphate are employed in a proportion of 1 to 5 parts by weight per 100 parts by weight of thermoplastic material.

6. Compositions according to one of Claims 1 to 5, characterized in that the thermoplastic material includes from 10 to 90 % by weight of the polymer or copolymer of an alkenylaromatic hydrocarbon and from 90 to 10 % by weight of thermoplastic resin.

7. Compositions according to one of Claims 1 to 6, characterized in that the thermoplastic resin is included in a proportion of not more than 20 % by weight in the thermoplastic material.

8. Compositions according to one of Claims 1 to 7, characterized in that the polyol is chosen from tetrols, pentols, hexols and octols.

9. Compositions according to Claim 8, characterized in that the polyol is inositol.

10. Compositions according to one of Claims 1 to 9, characterized in that they additionally include ingredients facilitating their use and/or improving their stability, in a quantity of between 0.1 and 1 % by weight.

11. Compositions according to one of Claims 1 to 10, characterized in that they do not include any inorganic phosphate.

12. Process for the preparation of the compositions in accordance with one of Claims 1 to 11 by blending the various constituents at a temperature which is higher than the softening point of the polymer or copolymer of an alkenylaromatic hydrocarbon, and which is between 150 and 200°C, for a period of between 1 and 5 minutes in an internal mixer or an extruder.

13. Industrial articles obtained by conversion of compositions in accordance with one of Claims 1 to 11.

## Patentansprüche

1. Thermoplastische Zusammensetzungen, enthaltend mindestens ein Polymer oder Copolymer eines vinylaromatischen Kohlenwasserstoffs und des Melaminisocyanurats oder des Melamins, dadurch gekennzeichnet, daß sie auf 100 Gew.-Teile eines thermoplastischen Materials, das mindestens ein Polymer oder Copolymer eines vinylaromatischen Kohlenwasserstoffs und gegebenenfalls mindestens eines weiteren thermoplastischen oder elastomeren Harzes umfaßt, enthalten:
- 5 bis 30 Gew.-Teile mindestens einer stickstoffhaltigen Verbindung, ausgewählt aus Melamin und Melaminisocyanurat,
- 2 bis 10 Gew.-Teile mindestens eines Polyols mit mindestens 4 Hydroxylfunktionen pro Molekül, und
- 0 bis 14 Gew.-Teile mindestens eines organischen Phosphorsäureesters.

2. Zusammensetzungen nach Anspruch 1, dadurch gekennzeichnet, daß sie einen organischen Phosphorsäureester enthält.

3. Zusammensetzungen nach Anspruch 2, dadurch gekennzeichnet, daß der Ester mindestens einen aromatischen Ring enthält.

4. Zusammensetzungen nach Anspruch 3, dadurch gekennzeichnet, daß der Ester Tris-(2-Ethylhexyl)phosphat oder Triphenylphosphat ist.

5. Zusammensetzungen nach Anspruch 4, dadurch gekennzeichnet, daß das Tris-(2-Ethylhexyl)phosphat und das Triphenylphosphat in Mengen von 1 bis 5 Gew.-Teilen auf 100 Gew.-Teilen des thermoplastischen Materials eingesetzt werden.

6. Zusammensetzungen nach einem der Ansprüche 1 bis 5, dadurch gekennzeichnet, daß das thermoplastische Material 10 bis 90 Gew.-% des Polymers oder Copolymers eines vinylaromatischen Kohlenwasserstoffs und 90 bis 10 Gew.-% thermoplastisches Harz umfaßt.

7. Zusammensetzungen nach einem der Ansprüche 1 bis 6, dadurch gekennzeichnet, daß das elastomere Harz in Mengen von höchstens 20 Gew.-% in dem thermoplastischen Material enthalten ist.

8. Zusammensetzungen nach einem der Ansprüche 1 bis 7, dadurch gekennzeichnet, daß das Polyol aus Tetrolen, Pentolen, Hexolen und Octolen ausgewählt ist.

9. Zusammensetzungen nach Anspruch 8, dadurch gekennzeichnet, daß das Polyol Inositol ist.

10. Zusammensetzungen nach einem der Ansprüche 1 bis 9, dadurch gekennzeichnet, daß sie außerdem in einer Menge zwischen 0,1 und 1 Gew.-% Zusatzstoffe enthalten, die ihre Handhabung erleichtern und/oder ihre Stabilität verbessern.

11. Zusammensetzungen nach einem der Ansprüche 1 bis 10, dadurch gekennzeichnet, daß sie kein anorganisches Phosphat enthalten.

12. Verfahren zur Herstellung von Zusammensetzungen nach einem der Ansprüche 1 bis 11 durch Kneten der verschiedenen Bestandteile bei einer Temperatur oberhalb des Erweichungspunktes des Polymers oder Copolymers eines vinylaromatischen Kohlenwasserstoffs zwischen 150 und 200 °C während einer Dauer zwischen 1 und 5 Minuten in einer internen Knetvorrichtung oder einem Extruder.

13. Industrieartikel, erhalten durch Bearbeitung von Zusammensetzungen nach einem der Ansprüche 1 bis 11.
